# EUROPÄISCHE PATENTSCHRIFT

(11) **EP 3 105 065 B1**
(45) Veröffentlichungstag und Bekanntmachung des Hinweises auf die Patenterteilung: **01.07.2020**
(21) Anmeldenummer: 15704959.4
(22) Anmeldetag: 10.02.2015
(51) Int. Cl.: B42D 25/43, B42D 25/445, B42D 25/373, B42D 25/378, B42D 25/455, B42D 25/46, B42D 25/328, B32B 15/00, B32B 15/04, B32B 15/20, B32B 27/00, B32B 27/06, B32B 27/18, B32B 27/20, B32B 27/26, B32B 27/36

(54) **VERFAHREN ZUM HERSTELLEN EINES SICHERHEITSELEMENTS MIT NEGATIVSCHRIFT**
METHOD FOR PRODUCING A SECURITY ELEMENT WITH A NEGATIVE INSCRIPTION
PROCÉDÉ DE FABRICATION D'UN ÉLÉMENT DE SÉCURITÉ À IMPRESSION EN NÉGATIF

(30) Priorität: 11.02.2014 DE 102014001842
(43) Veröffentlichungstag der Anmeldung: 21.12.2016
(73) Patentinhaber: Giesecke+Devrient Currency Technology GmbH, 81677 München (DE)
(72) Erfinder: HOFFMÜLLER, Winfried, 83646 Bad Tölz (DE); DORFF, Giselher, 83607 Holzkirchen (DE); BURCHARD, Theodor, 83052 Götting (DE); LAZZERINI, Maurizio, I-20070 Cerro al Lambro (IT)
(86) Internationale Anmeldenummer: PCT/EP2015/000288
(87) Internationale Veröffentlichungsnummer: WO 2015/120975

(56) Entgegenhaltungen:
- WO-A1-2005/049745
- WO-A2-2005/051675
- WO-A2-2010/015381
- WO-A2-2010/015384

## Beschreibung

Die Erfindung betrifft ein Verfahren zur Herstellung eines Sicherheitselements mit zwei zueinander gepasserten Motivschichten, insbesondere Motivschichten mit im Durchlicht und bevorzugt auch im Auflicht visuell erkennbaren Zeichen, und ein mittels des Verfahrens erhältliches Sicherheitselement.

Wertgegenstände, insbesondere Wertdokumente wie Banknoten, Aktien, Ausweise, Kreditkarten, Urkunden, Schecks und andere fälschungsgefährdete Papiere, wie Ausweisdokumente unterschiedlichster Art, aber auch Markenartikel und Verpackungen von Markenartikeln werden zur Absicherung gerne mit Sicherheitselementen ausgestattet, die eine Überprüfung ihrer Echtheit ermöglichen und gleichzeitig als Schutz vor unerlaubter Reproduktion dienen. Die Sicherheitselemente können beispielsweise die Form von Sicherheitsfäden oder Aufklebern oder irgendeine andere in einen Wertgegenstand oder ein Sicherheitspapier einbringbare oder aufbringbare Form haben, wobei ein "Wertgegenstand" im Sinne der vorliegenden Erfindung jeder gegen Fälschung sicherungswerte Gegenstand ist, insbesondere ein Wertdokument, während ein "Sicherheitspapier" die noch nicht umlauffähige Vorstufe zu einem Wertdokument darstellt.

Sicherheitselemente sind typischerweise mehrschichtige Elemente mit mehreren Funktionsschichten. Funktionsschichten sind ganz allgemein Schichten, die irgendwelche Eigenschaften aufweisen, die visuell oder maschinell nachgewiesen werden können. Funktionsschichten enthalten daher beispielsweise Metallschichten, Farbstoffe, Lumineszenzstoffe, thermochrome Stoffe, Flüssigkristalle, Interferenzpigmente, elektrisch leitfähige Stoffe, magnetische Stoffe, lichtbeugende oder lichtbrechende Strukturen öder Kombinationen davon. Die Funktionsschichten sind meist als geometrische oder figürliche Muster bzw. Motive ausgebildet, d. h. es gibt innerhalb einer Schicht Funktionsbereiche mit der nachweisbaren Eigenschaft (beispielsweise Lumineszenz) und Aussparungen dazwischen. Werden mehrere Funktionsschichten übereinander angeordnet, ist es in der Regel wünschenswert, dass die Funktionsbereiche und die Aussparungen in den einzelnen Funktionsschichten exakt registerhaltig, d. h. mit hoher Passergenauigkeit, und mit konturenscharfen Kanten zwischen den Funktionsbereichen und den Aussparungen übereinander ausgebildet sind. Auf diese Weise kann eine Funktionsschicht unter einer anderen versteckt werden, beispielsweise magnetische Stoffe unter einer Farbschicht, oder es können Sicherheitselemente mit mehreren Funktionsschichten und "Negativschrift" hergestellt werden.

Sicherheitselemente mit Negativschrift weisen ein transparentes Substrat mit mindestens einer nicht transparenten Beschichtung, die Aussparungen (die Negativschrift) aufweist, auf. Diese Aussparungen können beliebige Formen haben, beispielsweise Buchstaben, Zahlen oder Muster irgendwelcher Art, insbesondere Linienmuster. Der in dieser Anmeldung verwendete Begriff "Negativschrift" umfasst demnach Aussparungen beliebiger Form, also jede Nicht-Vollflächigkeit in einer nicht transparenten Beschichtung. Je transparenter, d. h. je lichtdurchlässiger, das Trägersubstrat ist, desto ausgeprägter ist der Kontrast zwischen beschichteten und nicht beschichteten Bereichen. Bei sehr transparenten Substraten ist die Negativschrift im Auflicht deutlich erkennbar, bei weniger transparenten Substraten nur im Durchlicht. Weist ein derartiges Sicherheitselement mit Negativschrift zwei unterschiedliche Funktionsschichten auf, beispielsweise ein Motiv in Form einer goldfarbenen metallischen Beschichtung und darauf dasselbe Motiv als rote Druckfarbe, so erscheint dieses Motiv dem Betrachter von der einen Seite her gesehen goldfarben, von der anderen Seite her gesehen rot.

Derartige mehrschichtige Motive sind aufgrund der erforderlichen hohen Passergenauigkeit schwer nachahmbar. Insbesondere Motive mit Negativschriften bieten einen guten Fälschungsschutz, da im Durchlicht Ungenauigkeiten bei der Herstellung besonders leicht erkennbar sind, und "primitive" Fälschungsversuche, wie etwa das Kopieren mit Farbkopierern, auch für das ungeübte Auge sofort erkennbar sind.

Die Fälschungssicherheit ist umso höher, je feiner die Strukturen in den Funktionsschichten mit den zueinander gepasserten Motiven sind. Feinste Strukturen konturenscharf und im perfekten Register zueinander auszubilden stellt allerdings auch für autorisierte Hersteller eine Herausforderung dar. Es sind eine Reihe von Verfahren bekannt, die es ermöglichen sollen, Aussparungen in mehreren übereinander liegenden Funktionsschichten passergenau, d. h. deckungsgleich in allen Schichten, auszubilden.

Aus WO 92/11142 ist bekannt, Negativschriften in Funktionsschichten mittels durch Wärmeeinwirkung aktivierbare Druckfarben zu erzeugen. Die Druckfarben werden in Form der gewünschten Negativschrift unter den Funktionsschichten aufgedruckt und enthalten Wachse oder aufschäumende Additive, die bei Erwärmung erweichen bzw. ein Gas abspalten und dadurch Schaumstrukturen erzeugen. Dadurch verringert sich die Haftung in den mit der aktivierbaren Druckfarbe bedruckten Bereichen, und die Funktionsschichten können in diesen Bereichen mechanisch entfernt werden. DE 10 2007 055 112 offenbart ein Verfahren zur registerhaltigen, d. h. deckungsgleichen Ausbildung einer Negativschrift in mehreren Funktionsschichten mit Hilfe einer in Form der auszubildenden Negativschrift unter den Funktionsschichten aufgedruckten Druckfarbe, die einen Bestandteil enthält, der bei Bestrahlung oder bei Erwärmung oder bei Kontakt mit einer Waschflüssigkeit einen Prozess bewirkt, der dazu führt, dass seitens der Druckfarbe auf die darüber liegende Beschichtung eine Kraft ausgeübt wird, die die Beschichtung aufbrechen lässt. Diese Kraft kann durch ein Gas ausgeübt werden, das von Bestandteilen der Druckfarbe erzeugt wird, wenn diese mit Waschflüssigkeit in Kontakt kommen, bestrahlt und/oder erwärmt werden, oder durch ein Quellmittel in der Druckfarbe, das bei Kontakt mit einer Waschflüssigkeit aufquillt. Ist die mehrschichtige Beschichtung erst einmal aufgebrochen, ist sie für ein Auswaschen mit Waschflüssigkeit relativ leicht zugänglich.

Die genannten Verfahren funktionieren zufriedenstellend, solange keine sehr feinen Strukturen auszubilden sind. Ein Verfahren zum Bereitstellen deckungsgleicher Muster bzw. Motive mit hoher Könturenschärfe und Passergenauigkeit ist in der WO 2010/015384 A2 beschrieben. Der Grundgedanke besteht darin, eine klebefähige Resistschicht zu verwenden, um in zwei Funktionsschichten deckungsgleiche Muster auszubilden. Dazu wird eine Resistschicht in Form des gewünschten Musters auf eine erste Funktionsschicht aufgetragen. Das Muster wird in der ersten Funktionsschicht exakt reproduziert, indem die nicht durch den Resist geschützten Bereiche der ersten Funktionsschicht entfernt werden. Anschließend wird das Muster in der zweiten Funktionsschicht reproduziert, indem die zweite Funktionsschicht mit dem Resist verklebt wird. Die Verklebung findet nur in den Bereichen statt, in denen die zweite Funktionsschicht Kontakt mit dem Resist hat. Die nicht verklebten Bereiche der zweiten Funktionsschicht werden dann entfernt, während die verklebten Bereiche nicht entfernt werden können, wodurch in der zweiten Funktionsschicht eine exakte Reproduktion des Musters der Resistschicht und der ersten Funktionsschicht entsteht.

Ausgehend davon liegt der Erfindung die Aufgabe zugrunde, ein gegenüber dem obigen Stand der Technik verbessertes Verfahren zur Herstellung von Sicherheitselementen bereitzustellen, das es erlaubt, in zwei übereinander liegenden Schichten zumindest bereichsweise deckungsgleiche Muster bzw. Motive auszubilden.

Aufgabe der vorliegenden Erfindung ist es insbesondere, ein Sicherheitselement mit zwei Motivschichten mit einander entsprechenden Mustern bzw. Motiven, die eine hohe Passergenauigkeit aufweisen, bereitzustellen, wobei das Sicherheitselement bezüglich seiner Herstellung leicht erhältlich ist.

Eine bevorzugte Aufgabe der vorliegenden Erfindung besteht darin, ein Sicherheitselement mit zwei jeweils eine Prägestruktur (bzw.

Beugungsstruktur oder Hologrammstruktur) aufweisenden Metallisierungen bereitzustellen, wobei die Metallisierungen in Form zweier Motivschichten mit einander entsprechenden Mustern bzw. Motiven, die eine hohe Passergenauigkeit aufweisen, vorliegen und bezüglich ihrer Herstellung leicht erhältlich sind.

Diese Aufgabe wird durch das Herstellungsverfahren gemäß dem unabhängigen Verfahrensanspruch gelöst. Weiterbildungen der Erfindung sind Gegenstand der Unteransprüche.

Zusammenfassung der Erfindung
1. Verfahren zum Herstellen eines Sicherheitselements mit Negativschrift für ein Sicherheitspapier oder einen Wertgegenstand, insbesondere ein Wertdokument, gemäß dem Anspruch 1, folgende Schritte aufweisend:
   a) Bereitstellen eines transparenten Trägersubstrats;
   b) Versehen des Trägersubstrats mit einer geprägten Prägelackschicht;
   c) Bedrucken der Prägelackschicht mit einer fließfähigen, Metallpigmente enthaltenden Farbschicht in Form eines vorbestimmten Musters mit Farbschichtbereichen und die Negativschrift bildenden Aussparungen zwischen den Farbschichtbereichen, sodass sich an der Unterseite jedes einzelnen Farbschichtbereichs, an der die Farbschicht und die Prägelackschicht zueinander weisen, Metallpigmente räumlich entlang der Prägestruktur der Prägelackschicht ausrichten und eine erste, untere Farbschicht-Metallisierung bilden;
   d) In-Kontakt-Bringen der Farbschicht mit einem Prägewerkzeug, vorzugsweise bei hohem Druck und bei erhöhter Temperatur, sodass die Oberseite jedes einzelnen Farbschichtbereichs mit einer Prägestruktur versehen wird, entlang der sich Metallpigmente räumlich ausrichten und eine zweite, obere Farbschicht-Metallisierung bilden. Mit dem Ausdruck "erhöhte Temperatur" ist insbesondere eine Temperatur im Bereich von 60°C bis 130°C zu verstehen.
2. (Bevorzugte Ausgestaltung) Verfahren nach Anspruch 1, das nach dem Schritt b) und vor dem Schritt c) den folgenden, weiteren Schritt b1) aufweist:
   b1) Ausstatten der geprägten Prägelackschicht mit einer Prägelack-Metallisierung, die insbesondere mittels physikalischer Dampfabscheidung gebildet wird. Die Metallisierung ist so ausgestaltet, dass sich die in die Prägelackschicht eingeprägte Beugungsstruktur in der Metallisierung fortsetzt.
3. (Bevorzugte Ausgestaltung) Verfahren nach Anspruch 2, das nach dem Schritt d) den folgenden, weiteren Schritt e) aufweist:
   e) Entfernen der nicht durch Farbschichtbereiche geschützten Bereiche der Prägelack-Metallisierung mittels Ätzen, um Prägelack-Metallisierungsbereiche und Aussparungen dazwischen zu bilden, die zusammen mit den Aussparungen in der aus einem gegenüber Ätzung beständigen Material bestehenden Farbschicht die Negativschrift bilden.
4. (Bevorzugte Ausgestaltung) Verfahren nach Anspruch 2, das nach dem Schritt c) und vor dem Schritt d) den folgenden, weiteren Schritt c1) aufweist:
   c1) Entfernen der nicht durch Farbschichtbereiche geschützten Bereiche der Prägelack-Metallisierung mittels Ätzen, um Prägelack-Metallisierungsbereiche und Aussparungen dazwischen zu bilden, die zusammen mit den Aussparungen in der aus einem gegenüber Ätzung beständigen Material bestehenden Farbschicht die Negativschrift bilden.
5. (Bevorzugte Ausgestaltung) Verfahren nach einem der Ansprüche 2 bis 4, wobei die Prägelack-Metallisierung eine Aluminium-Metallisierung ist.
6. (Bevorzugte Ausgestaltung) Verfahren nach einem der Ansprüche 1 bis 5, wobei die im Schritt c) eingesetzte fließfähige, Metallpigmente enthaltende Farbschicht auf einem thermoplastischen Bindemittelharz basiert.
7. (Bevorzugte Ausgestaltung) Verfahren nach einem der Ansprüche 1 bis 5, wobei die im Schritt c) eingesetzte fließfähige, Metallpigmente enthaltende Farbschicht auf einem UV-vernetzenden Bindemittelharz basiert und das Vernetzen vor, während, oder nach dem In-Kontakt-Bringen der Farbschicht mit dem Prägewerkzeug durch UV-Strahlung ausgelöst wird.
8. (Bevorzugte Ausgestaltung) Verfahren nach einem der Ansprüche 1 bis 7, wobei die Metallpigmente auf einem von der Gruppe bestehend aus Aluminium, Edelstahl, Nichrome, Gold, Silber, Platin und Kupfer gewählten Metall, insbesondere auf Aluminium, beruhen, wobei der mittlere Teilchendurchmesser bevorzugt in einem Bereich von 8 bis 15 µm, weiter bevorzugt in einem Bereich von 9 bis 10 µm liegt und die erhaltenen Farbschicht-Metallisierungen jeweils in Form einer silbernen Spiegelschicht erscheinen.
9. (Bevorzugte Ausgestaltung) Verfahren nach einem der Ansprüche 1 bis 7, wobei die Metallpigmente von Ende-zu-Ende eine längste Abmessung in einem Bereich von 15 nm bis 1000 nm aufweisen und auf einem von der Gruppe bestehend aus Cu, Ag, Au, Zn, Cd, Ti, Cr, Mn, Fe, Co, Ni, Ru, Rh, Pd, Os, Ir und Pt gewählten Übergangsmetall, insbesondere auf Ag, beruhen, wobei das Aspektverhältnis, d.h. das Verhältnis der längsten Abmessung von Ende-zu-Ende bezogen auf die Dicke, in einem Bereich von 1,5 bis 300 ist und das Verhältnis des Bindemittels zu Metallpigment in der Farbschicht unterhalb von 10:1, insbesondere unterhalb 5:1, ist und die erhaltenen Farbschicht-Metallisierungen zwischen der Betrachtung in Transmission und der Betrachtung in Reflexion einen Farbwechsel zeigen.
10. (Bevorzugte Ausgestaltung) Verfahren nach Anspruch 9, wobei das Übergangsmetall Ag ist und die erhaltenen Farbschicht-Metallisierungen jeweils bei der Betrachtung in Transmission Blau und bei der Betrachtung in Reflexion Gold erscheinen.
11. (Bevorzugte Ausgestaltung) Verfahren nach einem der Ansprüche 1 bis 10, das den folgenden, weiteren Schritt f) aufweist:
   f) Versehen des Sicherheitselements mit einer Schutzschicht.

### Ausführliche Beschreibung der Erfindung

Der vorliegenden Erfindung liegt der Gedanke zugrunde, Metallisierungen drucktechnisch ausgehend von Metallpigmente enthaltender Druckfarbe bereitzustellen.

Die erfindungsgemäß verwendete Druckfarbe kann z.B. auf den in der WO 2005/051675 A2 (siehe darin z.B. die Beschreibung auf Seite 11, Zeile 10, bis Seite 12, vorletzter Absatz) beschriebenen Metallpigment-Zusammensetzungen beruhen. Die Pigmente beruhen auf einem Metall, das vorzugsweise von der Gruppe bestehend aus Aluminium, Edelstahl, Nichrome, Gold, Silber, Platin und Kupfer gewählt ist. Das Metall ist insbesondere bevorzugt Aluminium, wobei der mittlere Teilchendurchmesser bevorzugt in einem Bereich von 8 bis 15 µm, weiter bevorzugt in einem Bereich von 9 bis 10 µm liegt, gemessen mit einem Coulter LS130 Laserdiffraktionsgranulometer. Eine solche Druckfarbe ermöglicht die Bereitstellung einer "silbernen" Spiegelschicht. Darüber hinaus können die Metallpigment-Zusammensetzungen (z.B. gelb) eingefärbt sein.

Die erfindungsgemäß verwendete Druckfarbe kann des Weiteren bevorzugt auf den in der WO 2011/064162 A2 beschriebenen Effektpigment-Zusammensetzungen mit Farbkippeffekt beruhen. Die Pigmente weisen von Ende-zu-Ende eine längste Abmessung ("longest dimension of edge length") in einem Bereich von 15 nm bis 1000 nm auf und beruhen auf einem Übergangsmetall, das von der Gruppe bestehend aus Cu, Ag, Au, Zn, Cd, Ti, Cr, Mn, Fe, Co, Ni, Ru, Rh, Pd, Os, Ir und Pt gewählt ist. Das Übergangsmetall ist bevorzugt Ag. Das Aspektverhältnis (d.h. das Verhältnis der längsten Abmessung von Ende-zu-Ende bezogen auf die Dicke) ist vorzugsweise mindestens 1,5, insbesondere in einem Bereich von 1,5 bis 300. Das Verhältnis des Bindemittels zu Metallpigment ist vorzugsweise unterhalb von 10:1, insbesondere unterhalb 5:1. In Abhängigkeit von der Wahl des Aspektverhältnisses des Pigments, seiner längsten Abmessung von Ende-zu-Ende und der Einstellung des Pigment/Bindemittel-Verhältnisses lässt sich die Farbe bei Betrachtung der Druckschicht in Transmission und die Farbe bei Betrachtung in Reflexion einstellen (z.B. Blau in Transmission und Silber, Gold, Bronze, Kupfer oder Violett in Reflexion; darüber hinaus auch Violett, Magenta, Pink, Grün oder Braun in Transmission und verschiedenen Farben in Reflexion, die von der Wahl des Pigment/ Bindemittel-Verhältnisses abhängen). Farben mit Gold/Blau-Farbwechsel zwischen Reflexion und Transmission (anders gesagt, zwischen Auflicht- und Durchlicht-Betrachtung) sind z.B. in den Beispielen 1, 2 und 3 in der Tabelle 1 der WO 2011/064162 A2 genannt. Des Weiteren zeigt Beispiel 4 eine Farbe mit Gold/Violett-Farbwechsel, Beispiel 5 eine Farbe mit Grün-Gold/Magenta-Farbwechsel, Beispiel 7 eine Farbe mit Violett/Grün-Farbwechsel und Beispiel 8 eine Farbe mit Silber/Opak-Farbwechsel.

In dem im Stand der Technik WO 2010/015384 A2 (nachfolgend "Dokument D1") beschriebenen Herstellungsverfahren wird eine klebefähige Resistschicht verwendet, um in zwei Metallisierungen deckungsgleiche Muster auszubilden. Dazu wird eine Resistschicht in Form des gewünschten Musters auf eine erste Metallisierung aufgetragen.

In dem in der D1 beschriebenen Verfahren zur Erzeugung einer zweiseitig gepasserten Metallisierung werden die folgenden Schritte durchgeführt:
Schritt 1: Bereitstellen einer Prägelackschicht (Bezugsnummer 15 in Fig. 2a der D1).
Schritt 2: Bereitstellen einer Aluminium-Metallisierung (Bezugsnummer 12 in Fig. 2a der D1).
Schritt 3: Bereitstellen einer Resistschicht (Bezugsnummer 30 in Fig. 2a der D1).
Schritt 4: Demetallisierung mittels Ätzen (siehe die Figuren 2a und 2b der D1, insbesondere die nach dem Demetallisierungsschritt erhaltene Metallisierung 12 in Fig. 2b).
Schritt 5: Herstellen einer Metallspendefolie (siehe Fig. 2c der D1).
Schritt 5.1: Bereitstellen einer Prägelackschicht (Bezugsnummer 25 in Fig. 2c der D1).
Schritt 5.2: Bereitstellen einer nicht haftfesten Aluminium-Metallisierung (Bezugsnummer 22 in Fig. 2c der D1).
Schritt 6: Zusammenfügen der Resistschicht (Bezugsnummer 30 in Fig. 2b der D1) mit der nicht haftfesten Metallisierung (Bezugsnummer 22 in Fig. 2c der D1) unter erhöhtem Druck und erhöhter Temperatur, um auf diese Weise einen Verbund (Bezugsnummer 5 in der Fig. 2d der D1) zu erhalten. Durch den für das Verkleben erforderlichen hohen Druck wird die Resistschicht gleichzeitig mit einer Prägung versehen, sodass sie an der Oberseite sowohl eine Hologrammstruktur, als auch eine Metallisierung trägt.
Schritt 7: Schritt der Trennwicklung, bei dem die beiden verbundenen Sicherheitselement-Teilelemente auseinandergezogen werden, um auf diese Weise eine zweiseitig gepasserte Metallisierung (Bezugsnummer 1 in Fig. 2e der D1) bereitzustellen.

Demgegenüber kommt das Verfahren gemäß dem ersten Aspekt der vorliegenden Erfindung gänzlich ohne den Vorgang des Verklebens mittels eines Resistlacks, gefolgt von einem Abziehen von nicht haftfestem Metall von einer separaten Metallspendefolie, aus (siehe die obigen Schritte 5 bis 7 der D1). Darüber hinaus ist der separate Schritt des Ausstattens der anfänglich bereitgestellten Prägelackschicht mit einer vollflächigen Metallisierung (siehe der obige Schritt 2 der D1) im Verfahren gemäß dem ersten Aspekt der vorliegenden Erfindung lediglich optional.

Ein alternatives Verfahren gemäß einem weiteren Aspekt, der nicht Teil des beanspruchten Gegenstands der vorliegenden Erfindung ist, erfordert ähnlich wie das in der D1 beschriebene Verfahren den Vorgang des Verklebens mittels eines Resistlacks, gefolgt von einem Abziehen von nicht haftfestem Metall von einer separaten Metallspendefolie (siehe die obigen Schritte 5 bis 7 der D1). Verglichen mit dem in der D1 beschriebenen Verfahren ist der separate Schritt des Ausstattens der anfänglich bereitgestellten Prägelackschicht mit einer vollflächigen Metallisierung (siehe der obige Schritt 2 der D1) im Verfahren gemäß dem zweiten Aspekt der vorliegenden Erfindung jedoch lediglich optional.

Die Vorteile der Erfindung werden nachfolgend anhand von bevorzugten Ausführungsbeispielen in Verbindung mit den beigefügten Figuren näher erläutert, bei deren Darstellung auf eine maßstabs- und proportionsgetreue Wiedergabe verzichtet wurde, um die Anschaulichkeit zu erhöhen.

Es zeigen:
Fig. 1 ein erfindungsgemäßes Sicherheitselement in Durchsicht-Ansicht,
Fign. 2a-2d die Herstellung des erfindungsgemäßen Sicherheitselements, veranschaulicht an Schnitten durch das Sicherheitselement von Fig. 1 entlang der Linie A-A', durch das Verfahren gemäß dem ersten Aspekt der Erfindung;
Fign. 3a-3d eine weitere Herstellung des erfindungsgemäßen Sicherheitselements durch das Verfahren gemäß dem ersten Aspekt der Erfindung;
Fign. 4a-4c eine weitere Herstellung des erfindungsgemäßen Sicherheitselements durch das Verfahren gemäß dem ersten Aspekt der Erfindung;
Fign. 5a-5c die Herstellung eines Sicherheitselements durch ein alternatives Verfahren gemäß dem nicht beanspruchten weiteren Aspekt.

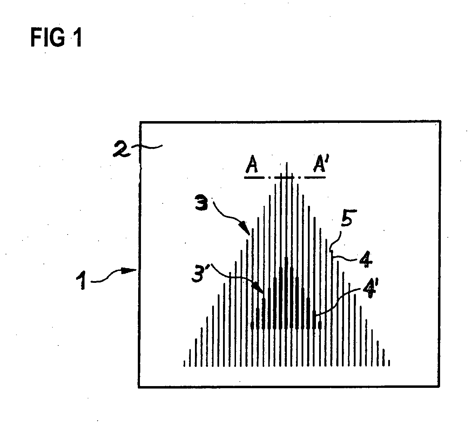

Fig. 1 zeigt ein erfindungsgemäßes Sicherheitselement 1 in einer Ansicht im Durchlicht. Das Sicherheitselement 1 weist mindestens folgende Schichten auf: ein transparentes Substrat 2, eine erste und eine zweite Metallisierung (Motivschichten), und eine Schicht, an deren Oberseite und Unterseite die erste Metallisierung bzw. die zweite Metallisierung angeordnet sind. Die beiden Motivschichten haben in dem Ausführungsbeispiel die gleiche Größe und Form und bedecken das Trägersubstrat 2 nur teilweise. Natürlich können die Motivschichten das Trägersubstrat auch vollflächig bedecken.

Außerdem kann eine der Motivschichten die andere Motivschicht nur teilweise bedecken oder mit ihr teilweise überlappen.

In der in Fig. 1 gezeigten Ausführungsform des erfindungsgemäßen Sicherheitselements bilden die beiden Motivschichten ein dreieckförmiges Muster 3 aus Linien 4, wobei die Linien 4 aus den Metallisierungen (Motivschichten) gebildet werden. Die Linien 4 werden durch Aussparungen 5 getrennt. Die Linien 4 variieren in ihrer Breite y, wodurch in Durchsicht durch das Sicherheitselement ein Sub-Muster 3' wahrnehmbar wird, in der gezeigten Ausführungsform ein weiteres Dreieck.

Die metallisierten Bereiche müssen natürlich nicht zwingend in Form paralleler Linien vorliegen, sondern können beliebige andere Formen haben.

Welches Motiv ein Betrachter in vorderseitiger Auflichtansicht und in rückseitiger Auflichtansicht wahrnimmt, hängt von der speziellen Gestaltung der oberen und der unteren Metallisierung ab.

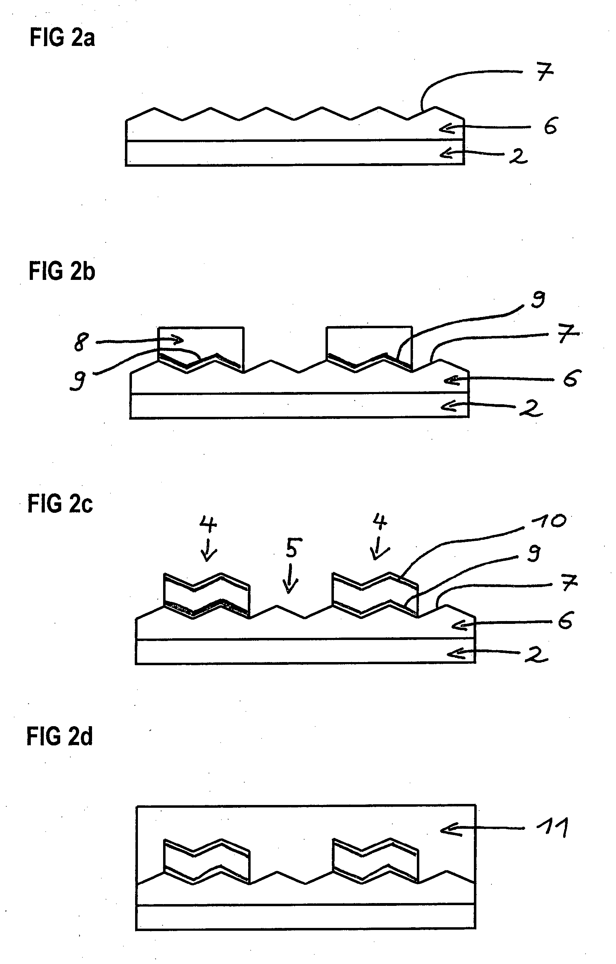

Fig. 2 veranschaulicht die Herstellung eines erfindungsgemäßen Sicherheitselements 1 durch das Verfahren gemäß dem ersten Aspekt der Erfindung. Gezeigt ist ein Schnitt entlang der Linie A-A' des in Fig. 1 dargestellten Sicherheitselements. Die Schichtfolge ist lediglich beispielhaft.

Fig. 2a zeigt einen Schichtaufbau, bestehend aus einem transparenten Trägersubstrat 2, beispielsweise einer Folie aus Polyethylenterephthalat (PET), und einer darauf aufgetragenen Prägelackschicht 6 mit eingeprägter Beugungsstruktur bzw. Hologrammstruktur 7.

Wie in der Fig. 2b gezeigt, wird die geprägte Prägelackschicht 6 in Form eines vorbestimmten Musters mit Farbschichtbereichen 8 bedruckt. Die Farbschicht basiert auf einer fließfähigen, Metallpigmente enthaltenden Farbe. Als Farbe eignet sich z.B. die in der WO 2005/051675 A2 beschriebene, Aluminium-Pigmente enthaltende, UV-vernetzende Farbe (nachstehend auch als "Supersilberfarbe" bezeichnet; bezüglich der Herstellung wird insbesondere auf die Seiten 11 bis 13 der WO 2005/051675 A2 verwiesen). Wie in der Fig. 2b gezeigt, passen sich die eingesetzten Aluminium-Pigmente räumlich an die holographische Struktur 7 an und bilden an der Unterseite der Farbschichtbereiche 8 eine Metallisierung 9 aus. Im vorliegenden Beispiel erscheint die Metallisierung 9 dem Betrachter infolge der verwendeten Supersilberfarbe in Form eines silbernen Metallspiegels. Die Farbe wird nach dem Aufdrucken gegebenenfalls physikalisch getrocknet. Der Druck kann je nach Wahl des Bindemittelsystems entweder in einem separaten Arbeitsschritt, oder "Inline" zusammen mit dem geplanten Verprägen erfolgen. Im Falle des Inline-Prozesses kann die Prägetemperatur niedriger gewählt werden, weil einerseits Kristallisationsvorgänge im Bindemittel noch nicht abgeschlossen sind, und andererseits, insbesondere beim Verprägen mithilfe einer Antifhaft-beschichteten Folie als Prägewerkzeug, die mögliche Klebrigkeit der Metallpigmentfarbe weniger problematisch ist.

In einem nachfolgenden Schritt wird der Schichtaufbau an seiner Oberseite bei geeigneter Temperatur (z.B. in einem Bereich von 60°C bis 130°C) und unter hohem Druck in Kontakt mit einem Prägewerkzeug gebracht. Als Prägewerkzeug dient z.B. eine insbesondere aus Nickel bestehende Prägewalze oder eine geprägte Folie. Das Prägewerkzeug kann vorzugsweise eine Antihaft-Beschichtung aufweisen. In diesem Arbeitsschritt wird das Motiv des Prägewerkzeugs in der Farbschicht 8 abgeformt (siehe Fig. 2c). Das Ablösen des Prägewerkzeugs erfolgt im Falle einer rotierenden Prägewalze sofort bei Prägetemperatur und im Falle einer Prägefolie bei einer beliebigen Temperatur zu einem beliebigen Zeitpunkt.

Die zu verprägende Metallpigmentfarbe kann insbesondere ein Vernetzungsmittel enthalten. Eine Vernetzung kann (insbesondere kurz) vor, während, oder nach dem Verprägen durch Strahlung (z.B. UV-Licht, sichtbares Licht, IR-Strahlung, Mikrowellen, Elektronenstrahlen) ausgelöst werden. In der Schicht können darüber hinaus geeignete Initiatoren enthalten sein.

Wie in der Fig. 2c gezeigt, passen sich die eingesetzten Aluminium-Pigmente räumlich an die Prägestruktur an und bilden an der Oberseite der Farbschichtbereiche 8 eine Metallisierung 10 aus. Im vorliegenden Beispiel erscheint die Metallisierung 10 dem Betrachter infolge der verwendeten Supersilberfarbe in Form eines silbernen Metallspiegels.

Die Metallisierungen 9 und 10 sind jeweils exakt deckungsgleich und bilden in der Darstellung von Fig. 1 die Linien 4. Die Aussparungen zwischen den Farbschichtbereichen 8 sind ebenfalls exakt deckungsgleich und bilden in der Darstellung von Fig. 1 die Aussparungen 5.

Fig. 2d zeigt das Sicherheitselement nach dem optionalen Beschichten mit einer Schutzschicht 11, z.B. ein Schutzlack, ein Heißsiegellack oder ein Primer. Die Schutzschicht 11 bedeckt die metallisierten Bereiche und füllt die Aussparungen zumindest teilweise auf.

Die im obigen Beispiel verwendete Druckfarbe basierte auf einem strahlenhärtenden Bindemittelsystem, z.B. einem UV-vernetzenden AcrylatSystem. Alternativ könnte auch ein thermoplastisches Bindemittel, z.B. ein Lösungsmittel-basiertes Acrylatsystem oder Vinylchlorid-Copolymersystem, verwendet werden.

Des Weiteren kann anstelle der im obigen Beispiel eingesetzten Supersilberfarbe insbesondere eine Metallpigmentfarbe verwendet werden, die auf den in der WO 2011/064162 A2 beschriebenen Effektpigment-Zusammensetzungen mit Farbkippeffekt beruht. Farben mit Gold/Blau-Farbwechsel zwischen Reflexion und Transmission (anders gesagt, zwischen Auflicht- und Durchlicht-Betrachtung) sind z.B. in den Beispielen 1, 2 und 3 in der Tabelle 1 der WO 2011/064162 A2 genannt.

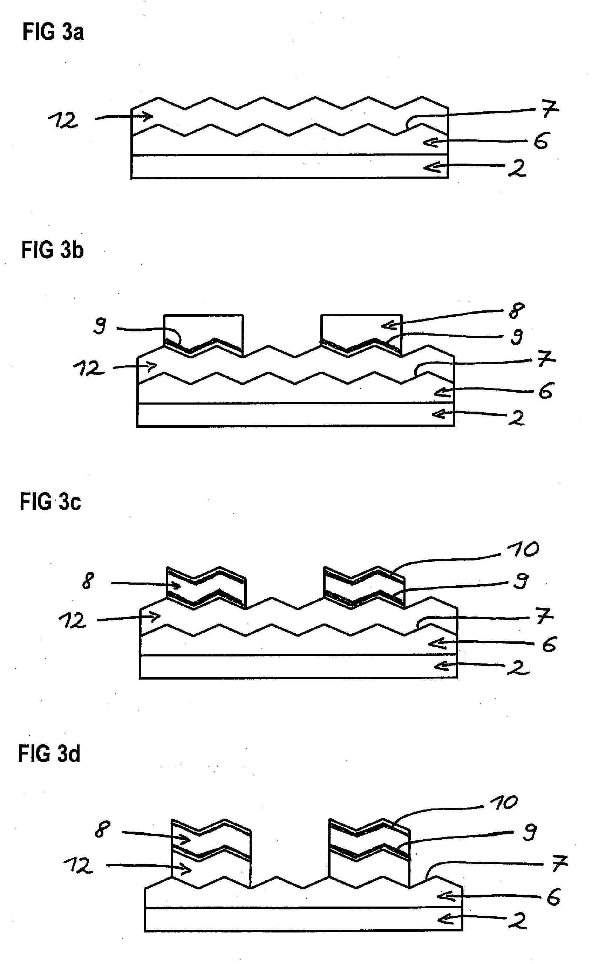

Fig. 3 veranschaulicht eine bevorzugte Ausführungsform des anhand der Figuren 2a bis 2d beschriebenen Herstellungsverfahrens gemäß dem ersten Aspekt der Erfindung.

Wie in Fig. 3a gezeigt, weist der anfängliche Schichtaufbau zusätzlich zum transparenten Trägersubstrat 2 und der darauf aufgetragenen Prägelackschicht 6 mit eingeprägter Beugungsstruktur 7 noch eine insbesondere mittels physikalischer Dampfabscheidung (PVD) gebildete Aluminium-Metallisierung 12 (nachstehend auch als "Prägelack-Metallisierung" bezeichnet) auf.

Die Aluminium-Metallisierung 12 wird in Form eines vorbestimmten Musters mit Farbschichtbereichen 8 bedruckt (siehe Figur 3b). Geeignete Druckfarben sind z.B. im obigen, zu den Figuren 2a-2d gehörenden Ausführungsbeispiel beschrieben. Die eingesetzten Metall-Pigmente passen sich räumlich an die holographische Struktur an und bilden an der Unterseite der Farbschichtbereiche 8 eine Metallisierung 9 aus. Die Metallisierung 9 wirkt für den Betrachter infolge der darunter angeordneten Prägelack-Metallisierung 12 noch brillanter. Darüber hinaus wird die holographische Struktur perfekt wiedergegeben.

In einem nachfolgenden Schritt wird der Schichtaufbau an seiner Oberseite bei erhöhter Temperatur und unter hohem Druck in Kontakt mit einem Prägewerkzeug gebracht und das Motiv des Prägewerkzeugs auf diese Weise in der Farbschicht 8 abgeformt (siehe Fig. 3c; eine ausführliche Beschreibung dieses Arbeitsschritts findet sich oben in der Beschreibung zu Figur 2c). Wie in der Fig. 3c gezeigt, passen sich die eingesetzten Aluminium-Pigmente räumlich an die Prägestruktur an und bilden an der Oberseite der Farbschichtbereiche 8 eine Metallisierung 10 aus.

Anschließend werden die nicht durch Farbschichtbereiche 8 geschützten Bereiche der Prägelack-Metallisierung 12 mittels Ätzen entfernt ("Demetallisierung"), z.B. mittels Säure oder Lauge. Dabei haben die Farbschichtbereiche 8 die Funktion eines Ätz-Resists. Die Ätzung der Metallpigmente innerhalb der Farbschichtbereiche 8 kann durch das die Pigmente umgebende Bindemittel verlangsamt oder sogar ganz unterbunden werden.

Nach der Ätzung werden Reste des Ätzmittels abgespült. Das in Figur 3d gezeigte Erzeugnis kann optional mit einer Schutzschicht versehen werden (siehe die obige Beschreibung zu Figur 2d).

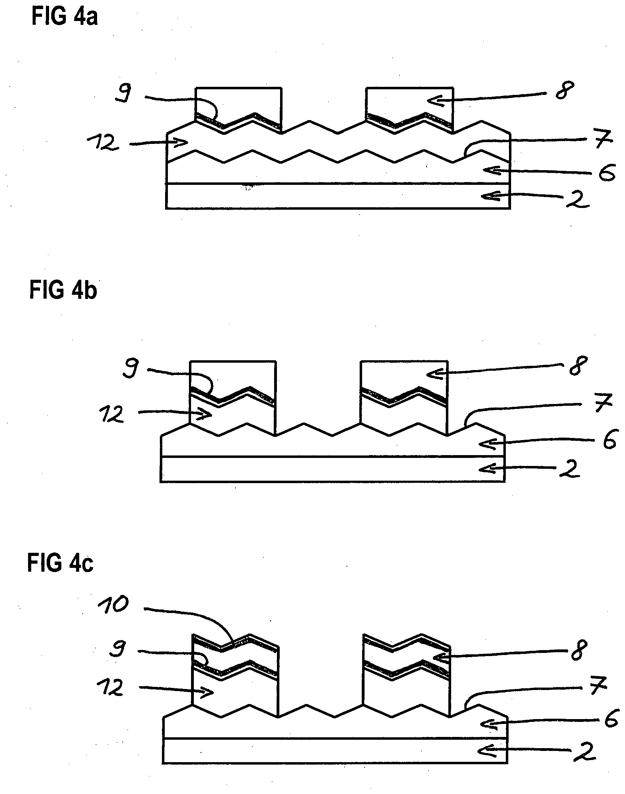

Fig. 4 veranschaulicht ein alternatives Vorgehen zu der obigen, in Verbindung mit den Figuren 3a bis 3d beschriebenen bevorzugten Ausführungsform.

Fig. 4a zeigt einen Schichtaufbau, umfassend ein transparentes Trägersubstrat 2, eine darauf aufgetragene Prägelackschicht 6 mit eingeprägter Beugungsstruktur 7 und eine insbesondere mittels physikalischer Dampfabscheidung (PVD) gebildete Aluminium-Metallisierung 12 ("Prägelack-Metallisierung"). Die Aluminium-Metallisierung 12 ist in Form eines vorbestimmten Musters mit Metallpigmentfarbschichtbereichen 8 bedruckt. Die eingesetzten Metall-Pigmente passen sich räumlich an die holographische Struktur an und bilden an der Unterseite der Farbschichtbereiche 8 eine Metallisierung 9 aus. Die Herstellung des in Fig. 4a gezeigten Schichtaufbaus ist weiter oben im Zusammenhang mit den Figuren 3a-3b ausführlich beschrieben.

In einem nachfolgenden Schritt werden die nicht durch Farbschichtbereiche 8 geschützten Bereiche der Prägelack-Metallisierung 12 mittels Ätzen entfernt ("Demetallisierung"), z.B. mittels Säure oder Lauge (siehe Figur 4b). Dabei haben die Farbschichtbereiche 8 die Funktion eines Ätz-Resists. Die Ätzung der Metallpigmente innerhalb der Farbschichtbereiche 8 kann durch das die Pigmente umgebende Bindemittel verlangsamt oder sogar ganz unterbunden werden. Nach der Ätzung werden Reste des Ätzmittels abgespült.

Das in Figur 4b gezeigte Erzeugnis wird anschließend an seiner Oberseite bei erhöhter Temperatur und unter hohem Druck in Kontakt mit einem Prägewerkzeug gebracht und das Motiv des Prägewerkzeugs auf diese Weise in der Farbschicht 8 abgeformt (siehe Fig. 4c; eine ausführliche Beschreibung dieses Arbeitsschritts findet sich oben in der Beschreibung zu Figur 2c). Wie in der Fig. 4c gezeigt, passen sich die eingesetzten Aluminium-Pigmente räumlich an die Prägestruktur an und bilden an der Oberseite der Farbschichtbereiche 8 eine Metallisierung 10 aus. Das in Figur 4c gezeigte Erzeugnis kann optional mit einer Schutzschicht versehen werden (siehe die obige Beschreibung zu Figur 2d).

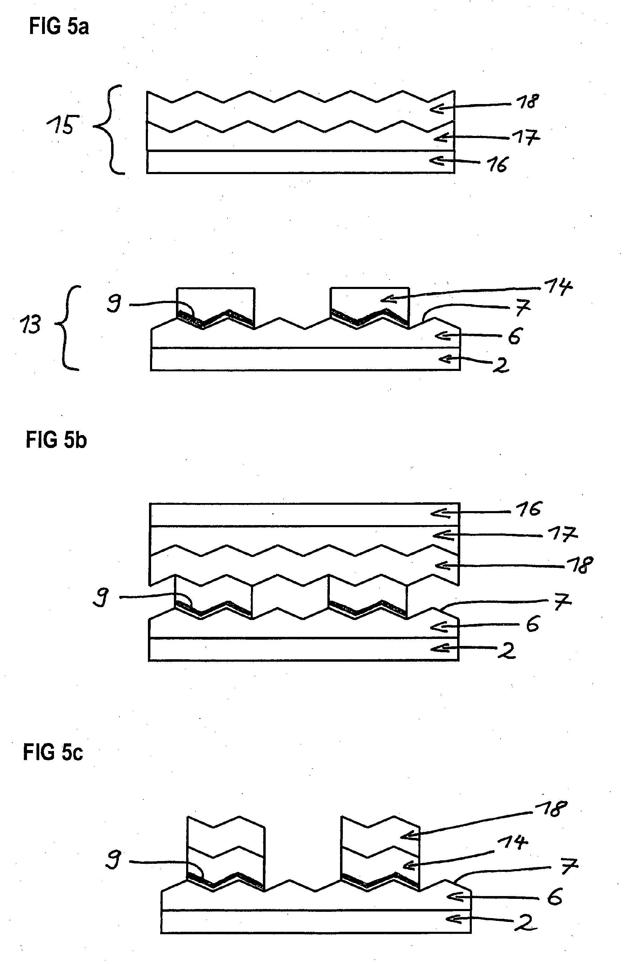

Figur 5 veranschaulicht die Herstellung eines Sicherheitselements durch das Verfahren gemäß einem nicht beanspruchten weiteren Aspekt.

Fig. 5a zeigt ein erstes Sicherheitselement-Teilelement 13, umfassend ein erstes Trägersubstrat 2, beispielsweise eine Folie aus Polyethylenterephthalat (PET), und eine darauf aufgetragene erste Prägelackschicht 6 mit eingeprägter Beugungsstruktur 7. Die geprägte erste Prägelackschicht 6 ist in Form eines vorbestimmten Musters mit Resistbereichen 14 bedruckt. Zur Herstellung der Resistbereiche werden klebfähige Resistlacke herangezogen, die mit Metallpigmenten pigmentiert sind. Als Metallpigmente eignen sich z.B. die in der WO 2005/051675 A2 beschriebenen Aluminium-Pigmente oder die Metallpigmente, die in der WO 2011/064162 A2 im Zusammenhang mit Effektpigment-Zusammensetzungen mit Farbkippeffekt beschrieben sind (siehe auch die obige Beschreibung zum Ausführungsbeispiel gemäß Figuren 2a bis 2d). Geeignete klebfähige Resistlacke sind z.B. aus der WO 2010/015384 A2 bekannt. Wie in der Fig. 5a gezeigt, passen sich die eingesetzten Metallpigmente räumlich an die holographische Struktur 7 an und bilden an der Unterseite der Resistbereiche 14 eine Metallisierung 9 ("untere Metallisierung") aus.

Fig. 5a zeigt darüber hinaus einen Schnitt durch das mit dem ersten Sicherheitselement-Teilelement 13 zu kombinierende zweite Sicherheitselement-Teilelement 15. Das zweite Sicherheitselement-Teilelement 15 besteht aus dem zweiten Trägersubstrat 16, der zweiten geprägten Prägelackschicht 17 und einer insbesondere mittels physikalischer Dampfabscheidung erzeugten Aluminium-Metallisierung 18 ("zweite Metallisierung"). Der Prägelack 17 wurde vor dem Auftragen der Metallisierung 18 z.B. mit einer wässrigen Tensidlösung abgewaschen, sodass die Metallisierung 18 schlecht auf dem Prägelack 17 haftet. In der Prägelackschicht 17 ist eine Beugungsstruktur eingeprägt, die sich in der Aluminium-Metallisierung 18 als Beugungsstruktur fortsetzt.

Fig. 5b zeigt, wie das erste Sicherheitselement-Teilelement 13 aus Fig. 5a und das zweite Sicherheitselement-Teilelement 15 aus Fig. 5a zu einem Verbund zusammengesetzt werden.

Die beiden Teilelemente werden zusammengepresst, wodurch sich die Beugungsstruktur der Aluminium-Metallisierung 18 in die Resistbereiche 14 überträgt, da es sich bei dem eingesetzten Resist um einen verformbaren Resistlack handelt. Mittels der Resistbereiche 14 werden das erste Sicherheitselement-Teilelement und das zweite Sicherheitselement-Teilelement miteinander verklebt.

Das Zusammenpressen der beiden Sicherheitselemente-Teilelemente kann ein- oder mehrstufig erfolgen, d.h. die beiden Teilelemente werden vorzugsweise bei erhöhter Temperatur in einer Heizwalze mit einer (einstufiges Zusammenpressen) oder mehreren sogenannten Kalanderwalzen aneinandergepresst (mehrstufiges Zusammenpressen), oder aber die beiden Teilelemente werden an mehreren Heizwalzen, die jeweils mit einer oder mehreren sogenannten Kalanderwalzen ausgestattet sind, aneinandergepresst (mehrstufiges Zusammenpressen). Das mehrstufige Zusammenpressen kann, abhängig von der jeweiligen Ausführungsform, zu einer besonders festen Verbindung der Sicherheitselement-Teilelemente führen. Beim Einsatz mehrerer Heizwalzen können auch Temperaturverläufe während des Zusammenpressens realisiert werden.

Nach der Verklebung und gegebenenfalls nach einer gewissen Wartezeit zum Abkühlen und zur Stabilisierung der Klebeverbindung, werden das zweite Trägersubstrat 16 und die zweite Prägelackschicht 17 abgezogen, beispielsweise durch Trennwicklung. Das Ergebnis ist in Fig. 5c gezeigt. Mit dem ersten Sicherheitselement-Teilelement 13 verklebt wurden nur die Bereiche der Aluminium-Metallisierung 18, die mit Resistbereichen 14 in Kontakt waren. Diese Bereiche bilden die oberen Metallisierungen an den Resistbereichen, die eine exakte Reproduktion des Musters der Resistbereiche 14 darstellen. Die übrigen Bereiche der Aluminium-Metallisierung 18 wurden zusammen mit dem zweiten Trägersubstrat 16 und der Prägelackschicht 17 abgezogen.

Wie vorstehend erwähnt, überträgt sich die Beugungsstruktur der Aluminium-Metallisierung 18 in die Resistbereiche 14. Die in den Resistbereichen 14 vorhandenen Metallpigmente passen sich zum Teil an die Beugungsstruktur an, d.h. zusätzlich zur Metallisierung 9 an der Unterseite der Resistbereiche bilden die Metallpigmente auch an der Oberseite der Resistbereiche 14 eine bestimmte Metallisierung aus. Die Brillanz der bestimmten Metallisierung wird durch die Aluminium-Metallisierung 18 allerdings erhöht.

Das in der Figur 5c gezeigte Sicherheitselement kann optional mit einer Schutzschicht versehen werden (siehe Figur 2d).

## Patentansprüche

1. Verfahren zum Herstellen eines Sicherheitselements (1) mit Negativschrift für ein Sicherheitspapier oder einen Wertgegenstand, insbesondere ein Wertdokument, folgende Schritte aufweisend:
a) Bereitstellen eines transparenten Trägersubstrats (2);
b) Versehen des Trägersubstrats (2) mit einer geprägten Prägelackschicht (6);
c) Bedrucken der Prägelackschicht (6) mit einer fließfähigen, Metallpigmente enthaltenden Farbschicht (8) in Form eines vorbestimmten Musters mit Farbschichtbereichen (4) und die Negativschrift bildenden Aussparungen (5) zwischen den Farbschichtbereichen (4), sodass sich an der Unterseite jedes einzelnen Farbschichtbereichs (4), an der die Farbschicht (8) und die Prägelackschicht (6) zueinander weisen, Metallpigmente räumlich entlang der Prägestruktur (7) der Prägelackschicht (6) ausrichten und eine erste, untere Farbschicht-Metallisierung (9) bilden;
d) In-Kontakt-Bringen der Farbschicht (8) mit einem Prägewerkzeug, vorzugsweise bei erhöhtem Druck und bei erhöhter Temperatur, sodass die Oberseite jedes einzelnen Farbschichtbereichs mit einer Prägestruktur versehen wird, entlang der sich Metallpigmente räumlich ausrichten und eine zweite, obere Farbschicht-Metallisierung (10) bilden.

2. Verfahren nach Anspruch 1, das nach dem Schritt b) und vor dem Schritt c) den folgenden, weiteren Schritt b1) aufweist:
b1) Ausstatten der geprägten Prägelackschicht (6) mit einer Prägelack-Metallisierung (12), die insbesondere mittels physikalischer Dampfabscheidung gebildet wird.

3. Verfahren nach Anspruch 2, das nach dem Schritt d) den folgenden, weiteren Schritt e) aufweist:
e) Entfernen der nicht durch Farbschichtbereiche (8) geschützten Bereiche der Prägelack-Metallisierung (12) mittels Ätzen, um Prägelack-Metallisierungsbereiche und Aussparungen dazwischen zu bilden, die zusammen mit den Aussparungen in der aus einem gegenüber Ätzung beständigen Material bestehenden Farbschicht (8) die Negativschrift bilden.

4. Verfahren nach Anspruch 2, das nach dem Schritt c) und vor dem Schritt d) den folgenden, weiteren Schritt c1) aufweist:
c1) Entfernen der nicht durch Farbschichtbereiche (8) geschützten Bereiche der Prägelack-Metallisierung (12) mittels Ätzen, um Prägelack-Metallisierungsbereiche und Aussparungen dazwischen zu bilden, die zusammen mit den Aussparungen in der aus einem gegenüber Ätzung beständigen Material bestehenden Farbschicht (8) die Negativschrift bilden.

5. Verfahren nach einem der Ansprüche 2 bis 4, wobei die Prägelack-Metallisierung (12) eine Aluminium-Metallisierung ist.

6. Verfahren nach einem der Ansprüche 1 bis 5, wobei die im Schritt c) eingesetzte fließfähige, Metallpigmente enthaltende Farbschicht (8) auf einem thermoplastischen Bindemittelharz basiert.

7. Verfahren nach einem der Ansprüche 1 bis 5, wobei die im Schritt c) eingesetzte fließfähige, Metallpigmente enthaltende Farbschicht (8) auf einem UV-vernetzenden Bindemittelharz basiert und das Vernetzen vor, während, oder nach dem In-Kontakt-Bringen der Farbschicht (8) mit dem Prägewerkzeug durch UV-Strahlung ausgelöst wird.

8. Verfahren nach einem der Ansprüche 1 bis 7, wobei die Metallpigmente auf einem von der Gruppe bestehend aus Aluminium, Edelstahl, Nichrome, Gold, Silber, Platin und Kupfer gewählten Metall, insbesondere auf Aluminium, beruhen, wobei der mittlere Teilchendurchmesser bevorzugt in einem Bereich von 8 bis 15 µm, weiter bevorzugt in einem Bereich von 9 bis 10 µm liegt und die erhaltenen Farbschicht-Metallisierungen (9, 10) jeweils in Form einer silbernen Spiegelschicht erscheinen.

9. Verfahren nach einem der Ansprüche 1 bis 7, wobei die Metallpigmente von Ende-zu-Ende eine längste Abmessung in einem Bereich von 15 nm bis 1000 nm aufweisen und auf einem von der Gruppe bestehend aus Cu, Ag, Au, Zn, Cd, Ti, Cr, Mn, Fe, Co, Ni, Ru, Rh, Pd, Os, Ir und Pt gewählten Übergangsmetall, insbesondere auf Ag, beruhen, wobei das Aspektverhältnis, d.h. das Verhältnis der längsten Abmessung von Ende-zu-Ende bezogen auf die Dicke, in einem Bereich von 1,5 bis 300 ist und das Verhältnis des Bindemittels zu Metallpigment in der Farbschicht (8) unterhalb von 10:1, insbesondere unterhalb 5:1, ist und die erhaltenen Farbschicht-Metallisierungen (9, 10) zwischen der Betrachtung in Transmission und der Betrachtung in Reflexion einen Farbwechsel zeigen.

10. Verfahren nach Anspruch 9, wobei das Übergangsmetall Ag ist und die erhaltenen Farbschicht-Metallisierungen (9, 10) jeweils bei der Betrachtung in Transmission Blau und bei der Betrachtung in Reflexion Gold erscheinen.

11. Verfahren nach einem der Ansprüche 1 bis 10, das den folgenden, weiteren Schritt f) aufweist:
f) Versehen des Sicherheitselements (1) mit einer Schutzschicht (11).

## Claims

1. A method for manufacturing a security element (1) having negative writing for a security paper or an object of value, in particular a value document, having the following steps:
a) supplying a transparent carrier substrate (2);
b) providing the carrier substrate (2) with an embossed emboss-lacquer layer (6);
c) printing the emboss-lacquer layer (6) with a flowable, metal pigments-containing ink layer (8) in the form of a predetermined pattern having ink-layer regions (4) and recesses (5) forming the negative writing between the ink-layer regions (4), so that at the underside of each individual ink-layer region (4) at which the ink layer (8) and the emboss-lacquer layer (6) face each other, metal pigments align themselves spatially along the emboss structure (7) of the emboss-lacquer layer (6) and form a first lower ink-layer metallization (9);
d) bringing in contact the ink layer (8) with an embossing tool, preferably at elevated pressure and at elevated temperature, so that the upper side of each individual ink-layer region is provided with an emboss structure along which metal pigments align themselves spatially and form the second, upper ink-layer metallization (10).

2. The method according to claim 1, which has after step b) and before step c) the following further step b1):
b1) equipping the embossed emboss-lacquer layer (6) with an emboss-lacquer metallization (12) which is formed in particular by means of physical vapor deposition.

3. The method according to claim 2, which has after step d) the following further step e):
e)removing the regions of the emboss-lacquer metallization (12) not protected by ink-layer regions (8) by means of etching, to form emboss-lacquer metallization regions and recesses therebetween which, together with the recesses in the ink layer consisting of an etch-resistant material (8), form the negative writing.

4. The method according to claim 2, which has after step c) and before step d) the following further step c1):
c1) removing the regions of the emboss-lacquer metallization (12) not protected by ink-layer regions (8) by means of etching, to form emboss-lacquer metallization regions and recesses therebetween which, together with the recesses in the ink layer consisting of an etch-resistant material (8), form the negative writing.

5. The method according to any of claims 2 to 4, wherein the emboss-lacquer metallization (12) is an aluminum metallization.

6. The method according to any of claims 1 to 5, wherein the flowable, metal pigments-containing ink layer (8) used in step c) is based on a thermoplastic binder resin.

7. The method according to any of claims 1 to 5, wherein the flowable, metal pigments-containing ink layer (8) used in step c) is based on a UV-cross-linking binder resin and the cross-linking is triggered by UV radiation before, during or after the bringing in contact of the ink layer (8) with the embossing tool.

8. The method according to any of claims 1 to 7, wherein the metal pigments are based on one of the metals chosen from the group consisting of aluminum, stainless steel, Nichrome, gold, silver, platinum and copper, in particular on aluminum, wherein the average particle diameter preferably is in a range of 8 to 15 µm, further preferably in a range of 9 to 10 µm and the obtained ink-layer metallizations (9, 10) respectively appear in the form of a silver mirror layer.

9. The method according to any of claims 1 to 7, wherein the metal pigments have a longest end-to-end dimension in a range of 15 nm to 1000 nm and are based on a transition metal chosen from the group consisting of Cu, Ag, Au, Zn, Cd, Ti, Cr, Mn, Fe, Co, Ni, Ru, Rh, Pd, Os, Ir and Pt, in particular of Ag, wherein the aspect ratio, i.e. the ratio of the longest end-to-end dimension relating to the thickness, is in a range of 1.5 to 300 and the ratio of the binder to metal pigment in the ink layer (8) is below 10:1, in particular below 5:1, and the obtained ink-layer metallizations (9, 10) show a color change between the viewing in transmission and the viewing in reflection.

10. The method according to claim 9, wherein the transition metal is Ag and the obtained ink-layer metallizations (9, 10) respectively appear blue upon the viewing in transmission and gold upon the viewing in reflection.

11. The method according to any of claims 1 to 10, which has the following further step f):
f) Providing the security element (1) with a protective layer (11).

## Revendications

1. Procédé de fabrication d'un élément de sécurité (1) à écriture en négatif pour un papier de sécurité ou un objet de valeur, en particulier pour un document de valeur, comportant les étapes suivantes :
a) mise à disposition d'un substrat porteur transparent (2) ;
b) placement d'une couche de vernis de gaufrage (6) gaufrée sur le substrat porteur (2) ;
c) application par impression, sur la couche de vernis de gaufrage (6), d'une couche d'encre (8) apte à l'écoulement et contenant des pigments métalliques, sous forme d'un motif prédéterminé ayant des zones de couche d'encre (4) et les évidements (5) constituant l'écriture en négatif entre les zones de couche d'encre (4), de telle sorte que, à la face inférieure de chaque zone individuelle de couche d'encre (4) à laquelle la couche d'encre (8) et la couche de vernis de gaufrage (6) se font face, des pigments métalliques s'alignent spatialement le long de la structure gaufrée (7) de la couche de vernis de gaufrage (6) et constituent une première métallisation (9), inférieure, de couche d'encre ;
d) mise en contact de la couche d'encre (8) avec un outil de gaufrage, de préférence à pression élevée et à température élevée, de telle sorte que la face supérieure de chaque zone individuelle de couche d'encre est pourvue d'une structure gaufrée le long de laquelle des pigments métalliques s'alignent spatialement et constituent une deuxième métallisation (10), supérieure, de couche d'encre.

2. Procédé selon la revendication 1, lequel, après l'étape b) et avant l'étape c), comporte l'autre étape b1) suivante :
b1) réalisation, sur la couche de vernis de gaufrage (6) gaufrée, d'une métallisation de vernis de gaufrage (12) constituée en particulier par dépôt physique en phase vapeur.

3. Procédé selon la revendication 2, lequel, après l'étape d), comporte l'autre étape e) suivante :
e) enlèvement, par décapage, des zones de la métallisation de vernis de gaufrage (12) non protégées par des zones de couche d'encre (8) afin de constituer des zones de métallisation de vernis de gaufrage et des évidements entre elles qui, en association avec les évidements qui sont situés dans la couche d'encre (8) et qui consistent en une matière résistant au décapage, constituent l'écriture en négatif.

4. Procédé selon la revendication 2, lequel, après l'étape c) et avant l'étape d), comporte l'autre étape c1) suivante :
c1) enlèvement, par décapage, des zones de la métallisation de vernis de gaufrage (12) non protégées par des zones de couche d'encre (8) afin de constituer des zones de métallisation de vernis de gaufrage et des évidements entre elles qui, en association avec les évidements qui sont situés dans la couche d'encre (8)et qui consistent en une matière résistant au décapage, constituent l'écriture en négatif.

5. Procédé selon une des revendications de 2 à 4, cependant que la métallisation de vernis de gaufrage (12) est une métallisation à l'aluminium.

6. Procédé selon une des revendications de 1 à 5, cependant que la couche d'encre (8) apte à l'écoulement et contenant des pigments métalliques utilisée à l'étape c) est basée sur une résine liante thermoplastique.

7. Procédé selon une des revendications de 1 à 5, cependant que la couche d'encre (8) apte à l'écoulement et contenant des pigments métalliques utilisée à l'étape c) est basée sur une résine liante réticulant aux UV, et que la réticulation est déclenchée par rayonnement UV avant, pendant ou après la mise en contact de la couche d'encre (8) avec l'outil de gaufrage.

8. Procédé selon une des revendications de 1 à 7, cependant que les pigments métalliques reposent sur un métal choisi dans le groupe consistant en de l'aluminium, de l'acier inoxydable, du nichrome, de l'or, de l'argent, de la platine ou du cuivre, en particulier en de l'aluminium, cependant que le diamètre moyen des particules est de préférence compris entre 8 et 15 µm, en outre de préférence compris entre 9 et 10 µm, et que les métallisations de couche d'encre (9, 10) obtenues apparaissent respectivement sous forme d'une couche miroir argentée.

9. Procédé selon une des revendications de de 1 à 7, cependant que les pigments métalliques ont, de bout en bout, une dimension la plus longue comprise entre 15 nm et 1000 nm et reposent sur un métal de transition choisi dans le groupe consistant en Cu, Ag, Au, Zn, Cd, Ti, Cr, Mn, Fe, Co, Ni, Ru, Rh, Pd, Os, Ir et Pt, en particulier en Ag, cependant que le rapport d'aspect, c'est-à-dire que le rapport de la dimension la plus longue de bout en bout est, relativement à l'épaisseur, compris entre 1,5 et 300, et que le rapport entre liant et pigment métallique dans la couche d'encre (8) se situe en-dessous de 10:1, en particulier en-dessous de 5:1,et que les métallisations de couche d'encre (9, 10) obtenues montrent entre l'observation en transmission et l'observation en réflexion un changement de couleur.

10. Procédé selon la revendication 9, cependant que le métal de transition est Ag et que les métallisations de couche d'encre (9, 10) obtenues apparaissent respectivement bleues lors de l'observation en transmission, et dorées lors de l'observation en réflexion.

11. Procédé selon une des revendications de 1 à 10, lequel comporte l'autre étape f) suivante :
